(19) Europäisches Patentamt

European Patent Office

Office européen des brevets

(11) **EP 0 721 795 B1**

(12) **EUROPÄISCHE PATENTSCHRIFT**

(45) Veröffentlichungstag und Bekanntmachung des Hinweises auf die Patenterteilung:
**14.03.2001 Patentblatt 2001/11**

(51) Int Cl.⁷: **B01D 53/94**

(21) Anmeldenummer: **96100258.1**

(22) Anmeldetag: **10.01.1996**

(54) **Verfahren und Vorrichtung zur katalytischen Stickoxid-Reduzierung von Kfz-Abgasen**

Process and device for catalytic reduction of nitroxyde in exhaust gases of vehicles

Procédé et installation pour la réduction catalytique de l'oxyde d'azote des gazs d'échappement des véhicules

(84) Benannte Vertragsstaaten:
**DE FR GB**

(30) Priorität: **13.01.1995 DE 19500788**

(43) Veröffentlichungstag der Anmeldung:
**17.07.1996 Patentblatt 1996/29**

(73) Patentinhaber: **DORNIER GmbH
88039 Friedrichshafen (DE)**

(72) Erfinder: **Benz, Uwe, Dipl.-Ing.
D-88690 Uhldingen (DE)**

(56) Entgegenhaltungen:
**EP-A- 0 147 751**

**Beschreibung**

Die Erfindung betrifft ein Verfahren und eine Vorrichtung zur katalytischen Reduktion von Stickoxiden für mobile Anwendungen nach dem Oberbegriff des Anspruch 1.

Für die Nutzung von Kraftfahrzeugen mit Otto- und insbesondere Dieselmotoren ist die Einhaltung entsprechender gesetzlicher Emissionsvorschriften unabdingbar. In diesem Zusammenhang wird die katalytische $NO_x$-Reduktion mit Wasserstoff vorteilhaft angewendet.

Diese katalytische Entfernung von Stickoxiden aus den Verbrennungsabgasen von Kraftfahrzeugen wird unter Einsatz von Wasserstoff an geeigneten Katalysatoren nach der Reaktion

$$2\,NO + 2\,H_2 \rightarrow N_2 + 2\,H_2O$$

durchgeführt.

Bei den bekannten Verfahren zur Entfernung von Stickoxiden nach der $NO_x$-Reduktion wird der für die Reaktion benötigte Wasserstoff im Fahrzeug mitgeführt, z.B. über Druckgastanks, Flüssig-Wasserstofftanks oder Metallhydridspeicher. An diesen Verfahren ist nachteilig, daß für die Wasserstoffmitführung große, schwere Behälter benötigt werden, die darüberhinaus eine eng limitierte Kapazität aufweisen, so daß kurze Nachfüllintervalle notwendig sind.

In der EP 0 537 968 A1 ist eine Vorrichtung zur katalytischen Reduktion von Stickoxiden in Abgasen von Kraftfahrzeugen unter Zufuhr von Wasserstoff bekannt. Die Wasserstofferzeugung erfolgt an Bord des Kraftfahrzeugs durch partielle Oxidation oder Reformierung von Methanol an einem entsprechenden Katalysator. Das Aufheizen dieser Katalysatoren erfolgt dadurch, daß sie in dem heißen Abgasstrom des Motors angeordnet sind.

Diese Vorrichtung weist folgende Nachteile auf:

- bei kaltem Motor, z.B. kurz nach dem Start, ist der Katalysator für die Reformierung bzw. partielle Oxidation noch nicht aktiv;
- der Motor muß derart eingestellt werden, daß eine zu hohe Abgastemperatur über die gesamte Lebensdauer des Motors, auch kurzzeitig, vermieden wird, um eine irreversible Desaktivierung des Katalysators zu verhindern;
- sie weist eine relativ unhandliche Baugröße auf.

Aufgabe der Erfindung ist es deshalb, ein Verfahren und eine Vorrichtung für die Wasserstofferzeugung in einem Kraftfahrzeug zu schaffen, das die beschriebenen Nachteile des Standes der Technik überwindet.

Diese Aufgabe wird mit dem Verfahren nach Patentanspruch 1 sowie der Vorrichtung nach Anspruch 4 gelöst. Vorteilhafte Ausbildungen der Erfindung sind Gegenstand weiterer Ansprüche.

Erfindungsgemäß wird der für die Erzeugung des Wasserstoffs verwendete Katalysator zur Reformierung von Kohlenwasserstoffen regelbar beheizt.

Die erfindungsgemäße Vorrichtung umfaßt eine regelbare, insbesondere elektrische Beheizungsvorrichtung, mit der unabhängig von den heißen Motorabgasen der Katalysator auf eine vorgewählte Temperatur gebracht und gehalten werden kann.

Die erfindungsgemäße regelbare Beheizung des Katalysators zur Reformierung von Kohlenwasserstoffen hat folgende Vorteile:

- durch Vorheizen des Katalysators kann dessen Aktivierung bereits mit dem Start des Motors erreicht werden
- es ist möglich, den Katalysator auch bei längeren Stillstand des Fahrzeugs betriebsbereit zu halten (stand by-Betrieb)
- der Katalysator kann durch eine Temperaturregelung bei dessen optimaler Betriebstemperatur betrieben werden
- gegenüber den bekannten Vorrichtungen, die eine Erwärmung des Katalysators durch die heißen Motorabgase erzielen, kann die Temperatur flexibel und unabhängig von dem Betriebszustand des Motors geregelt werden, eine Schädigung des Katalysators (Desaktivierung) wird in jedem Fall vermieden
- gegenüber den bekannten Vorrichtungen ergibt sich eine kompakte Einheit mit geringen Abmessungen, die als separates Bauteil leicht in eine vorhandene Vorrichtung integriert (z.B. angeflanscht) werden kann

Die Erfindung wird anhand von Fig. näher erläutert. Es zeigen:

Fig. 1    eine schematische Darstellung zum Ablauf der Wasserdampfreformierung von Methanol

Fig. 2    einen Reaktor zur Durchführung der Wasserdampfreformierung von Methanol

Fig. 3    eine schematische Darstellung zum Ablauf der partiellen Oxidation von Methanol

Fig. 4    einen Reaktor zur Durchführung der partiellen Oxidation von Methanol

Fig. 5    einen weiteren Reaktor zur Durchführung der partiellen Oxidation oder zur Wasserdampfreformierung.

Die $H_2$-Erzeugung für die NO-Reduzierung erfolgt an Bord des Kraftfahrzeugs durch Reformierung von Kohlenwasserstoffen. Besonders geeignet ist hierfür Methanol. Auch die Verwendung von Diesel- oder Ottokraftstoff zur Reformierung ist möglich.

Eine vorteilhafte Reaktion hierzu ist die Wasserdampfreformierung von Methanol nach der Glei-

chung

$$CH_3OH + H_2O \rightarrow 3\,H_2 + CO_2$$

und die partielle Oxidation von Methanol nach der Gleichung

$$CH_3OH + 1/2\,O_2 \rightarrow 2\,H_2 + CO_2.$$

Die erste Reaktion ist endotherm und mit Hilfe an sich bekannter Katalysatoren, z.B. Katalysatoren mit den aktiven Komponenten Kupfer und Zink bereits bei 200 bis 400°C durchführbar.

Die zweite Reaktion ist exotherm und wird ebenfalls mit Unterstützung an sich bekannter Katalysatoren z.B. Pt, Pd, Ru oder CuZnO durchgeführt.

Bei beiden Reaktionen entsteht je nach Betriebsweise der Reaktoren CO im Bereich von einigen hundert ppm bis zu einigen Prozenten.

Die Prozesse der Wasserdampfreformierung und der partiellen Oxidation anderer Kohlenwasserstoffe sind an sich bekannt und laufen nach vergleichbaren Gleichungen, jedoch unter anderen Reaktionsbedingungen (im wesentlichen höhere Temperaturen) und ggf. an anderen Katalysatoren ab. Für die Prozeßführungen und Reaktorvarianten gelten jedoch prinzipiell die gleichen Aussagen wie nachfolgend für den Spezialfall des Methanols beschrieben.

In einer vorteilhaften Ausführung kann die Wasserstoff-Erzeugung auch mit einer Mischreaktion aus Wasserdampfreformierung und partieller Oxidation durchgeführt werden.

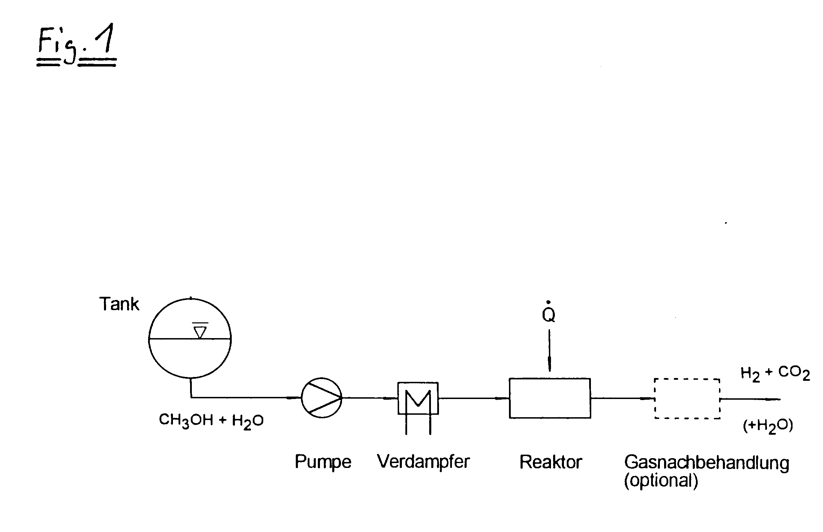

Wasserdampf-Reformierung von Methanol (Fig. 1.2)

Fig. 1 zeigt den Verfahrensablauf für die Wasserdampfreformierung von Methanol. Zunächst wird aus einem Tank ein Wasser-Methanol-Gemisch, vorzugsweise im Molverhältnis Methanol:Wasser = 1:1 bis 1:2 gefördert. Der Tank kann hierbei unter Umgebungsdruck stehen. Die Förderung erfolgt über eine Pumpe, die über eine geeignete Ansteuerung (z.B. Drehzahlregelung) lastabhängig direkt die Dosierfunktion übernimmt. Alternativ kann die Förderung der Flüssigkeiten über eine konstant laufende Pumpe erfolgen, wobei die anschließende Dosierung z.B. über Elektromagnetventile, vergleichbar den Einspritzventilen in einem Kfz vorgenommen wird. Anschließend wird das Wasser-Methanol-Gemisch in einem Verdampfer verdampft und in den Reaktor geleitet. Im Reaktor findet dann unter Zuführung von Wärme am Katalysator die Umsetzung zu $CO_2$ und $H_2$ statt. Erfindungsgemäß ist hierbei eine direkte Beheizung des Katalysators vorgesehen. Als Wärmequelle kann hier vorzugsweise eine elektrische Widerstands-Heizung verwendet werden. Die Wärmezufuhr im Reaktor kann z.B. durch eine Temperaturregelung im Katalysator angepaßt werden. Gegebenenfalls kann anschließend der CO-Anteil des Produktgases in einer weiteren Reaktorstufe gesenkt werden und/oder die Wasserstoffausbeute erhöht werden, z.B. über die an sich bekannte Shift-Reaktion $CO + H_2O \rightarrow H_2 + CO_2$.

Anstatt Wasser und Methanol als Gemisch in demselben Tank zu speichern, können Wasser und Methanol auch getrennt voneinander in verschiedenen Tanks gespeichert und daraus gefördert werden.

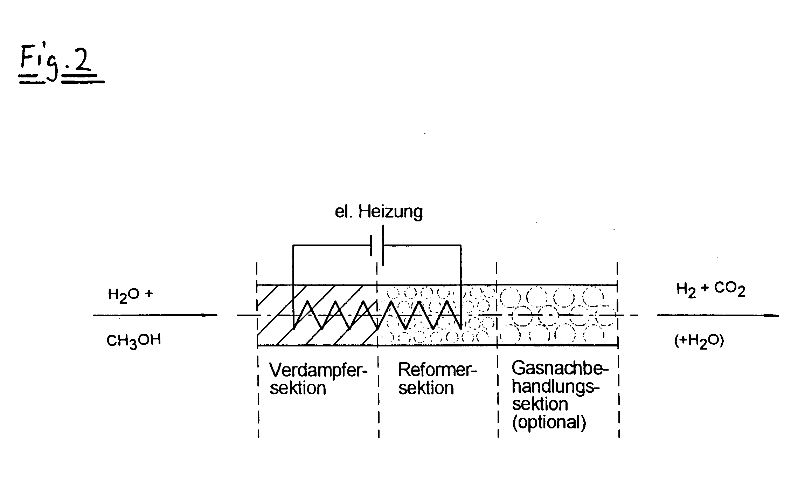

Fig. 2 zeigt eine vorteilhafte Ausführung eines Reaktors zur Durchführung der Wasserdampfreformierung von Kohlenwasserstoffen. Er ist in der Form eines Rohres ausgebildet, vorzugsweise mit einem Innendurchmesser von 5 bis 50 mm. Der Reaktor ist in drei Stufen unterteilt. Im Zentrum befindet sich die Hauptreaktionsstufe, in welchem ein Katalysator eingebracht ist. Hier findet die Wasserdampfreformierung statt. Der Katalysator liegt in Form von Schüttgut vor, allerdings können auch Monolithe verwendet werden. Vor der Hauptreaktionsstufe ist eine Verdampfersektion angeordnet, in der das eintretende Wasser-Methanol-Gemisch verdampft wird. Im Anschluß an die Hauptreaktionsstufe ist eine Nachbehandlungsstufe angeordnet. Darin wird das entstehende CO über eine Shiftreaktion vermindert.

Abgebildet ist auch die erfindungsgemäße elektrische Heizung, mit der der Katalysator der Hauptreaktionszone beheizt wird. Sie ist hier im Reaktionsraum selbst angeordnet, sie kann aber auch im Rohraußenbereich angeordnet werden.

In der Abbildung ist zu erkennen, daß mit der bereits erwähnten Heizung auch die Verdampferstufe beheizt wird. Es sind aber auch Ausführungen möglich, mit dem die einzelnen Stufen einschließlich der Nachbehandlungsstufe unabhängig voneinander beheizbar sind. So kann insbesondere die Verdampferstufe stärker beheizt werden als die Reformerstufe (Hauptreaktionsstufe). Die Nachbehandlungsstufe wird nicht oder nur schwach beheizt, wobei die entsprechende Heizung hier nicht eingezeichnet ist.

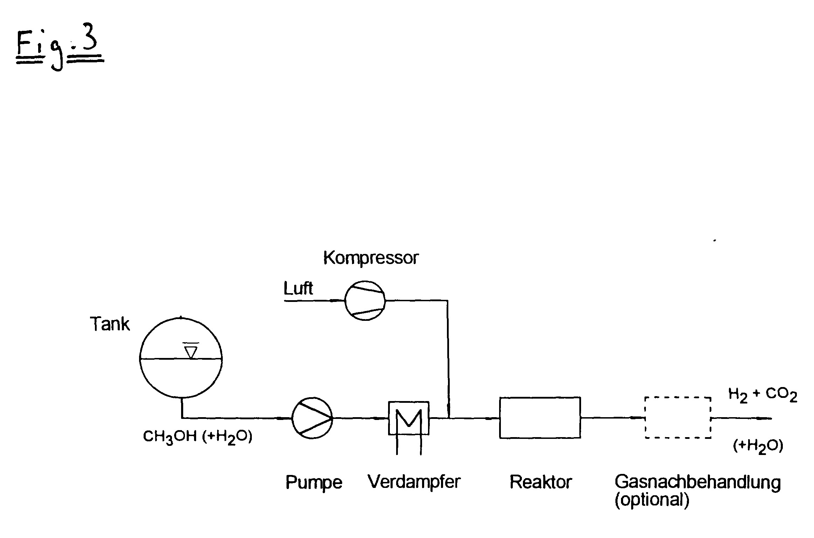

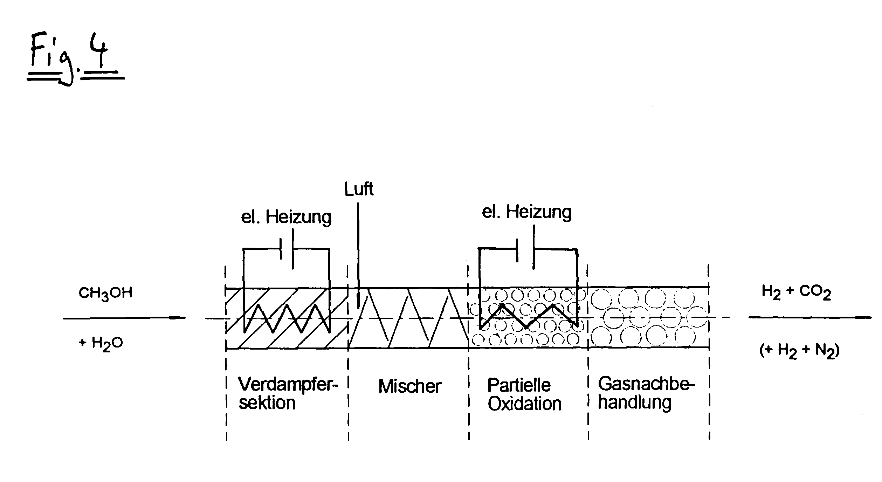

Partielle Oxidation von Methanol (Fig. 3,4)

Fig. 3 zeigt den Verfahrensablauf bei der partiellen Oxidation von Methanol. Zunächst wird aus einem Tank ein Wasser-Methanol-Gemisch, vorzugsweise im Molverhältnis Methanol : Wasser = 1:0 bis 1:2 gefördert. Der Tank kann hierbei unter Umgebungsdruck stehen. Die Förderung erfolgt über eine Pumpe, die ggf. über eine geeignete Ansteuerung, z.B. Drehzahlregelung lastabhängig direkt die Dosierfunktion übernimmt. Alternativ kann die Förderung der Flüssigkeiten über eine konstant laufende Pumpe erfolgen, wobei die anschließende Dosierung z.B. über Elektromagnetventile, vergleichbar den Einspritzventilen in einem Kfz vorgenommen wird. Anschließend wird das Wasser-Methanol-Gemisch verdampft. Danach wird dem Dampfgemisch über einen Kompressor z.B. eine Membranpumpe Luft zugeführt und die Mischung in den Reaktor geleitet. Im Reaktor findet an einem Katalysator die exotherme Umsetzung zu $CO_2$ und $H_2$ statt. Vorteilhaft kann anschließend der CO-Anteil des Produktgases in einer weiteren Reaktorstufe gesenkt werden und/oder die Wasserstoffausbeute erhöht werden, z.B. über die an sich bekannte Shift-Reaktion $CO + H_2O \rightarrow H_2 + CO_2$.

Wie beim oben beschriebenen Prozeß der Wasserdampfreformierung können auch hier Wasser und Methanol anstatt als Gemisch in demselben Tank gespeichert zu werden, auch getrennt voneinander in verschiedenen Tanks gelagert und daraus gefördert werden. Dabei kann vorteilhaft das Wasser auch erst nach der partiellen Oxidation zugeführt werden. Dies hat den Vorteil, das der CO-Gehalt zusätzlich vermindert wird.

In Fig. 4 ist eine konkrete Ausführung eines Reaktors zur Durchführung der partiellen Oxidation von Methanol dargestellt. Er ist als Rohr ausgebildet, dessen Innendurchmesser bevorzugt 5 bis 50 mm beträgt. Im Zentrum befindet sich wieder die Hauptreaktionsstufe mit dem Katalysator, an dem die partielle Oxidation geschieht. Erfindungsgemäß ist für den Katalysator eine regelbare Beheizung in Form einer elektrischen Widerstandsheizung vorgesehen.

Im rohrförmigen Reaktor - der Hauptreaktionsstufe vorgeschaltet - ist eine Verdampferstufe angeordnet, die durch eine elektrische Heizung beheizt wird. Anstatt oder zusätzlich zu der Heizung kann eine Zufuhreinrichtung vorhanden sein, mit der die bei der partiellen Oxidation an dem Katalysator entstehenden heißen Produktgase z.B. im Gegenstrom an die Außenwand des Reaktors geführt werden können.

Zwischen Verdampferstufe und Hauptreaktionsstufe befindet sich eine Mischerstufe, in dem das dampfförmige Methanol-Wasser-Gemisch mit von außen zugeführter Luft vermischt und in die Reformerstufe geleitet wird.

Der Reformerstufe nachgeschaltet ist eine Gasnachbehandlungsstufe, in welcher ein weiterer Umsatz von Restmethanol mit Wasserdampf erfolgt und/oder das entstehende CO mit Wasserdampf über eine Shift-Reaktion vermindert wird. Diese Stufe wird nicht oder nur schwach beheizt, wobei die entsprechende Heizung hier nicht eingezeichnet ist.

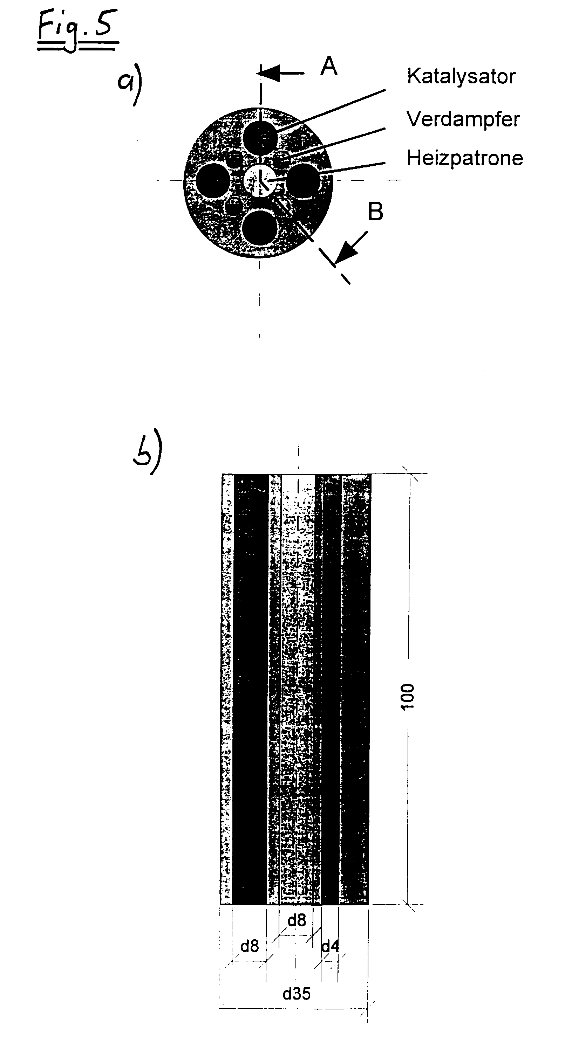

Fig. 5 zeigt einen weiteren Reaktor, dessen prinzipieller Aufbau sowohl für die Wasserdampfreformierung wie auch für die partielle Oxidation von Kohlenwasserstoffen verwendet werden kann. Fig. 5a zeigt dabei einen Schnitt des Reaktors in radialer Richtung, Fig. 5b zeigt einen Schnitt in axialer Richtung entlang der Linie AB. Beispielhafte Bemaßungen sind angegeben (in mm). Der Reaktor besteht aus einem kompakten zylindrischen Körper, der mehrere axiale Bohrungen aufweist. In vier dieser axialen Bohrungen ist der Katalysator, z.B. als Schüttgut, enthalten. Die vier weiteren axialen Bohrungen, in diesem Ausführungsbeispiel mit geringerem Durchmesser verglichen mit den Bohrungen für den Katalysator, stellen die Verdampferstufe dar. Im Zentrum des Reaktors ist eine weitere Bohrung vorhanden. Sie enthält eine Heizpatrone. Da diese Heizpatrone sowohl von den Verdampferbohrungen wie auch den Katalysatorbohrungen umgeben ist, kann sie sowohl für die Verdampfung eingesetzt werden wie auch für die erfindungsgemäße Beheizung des Katalysators. Optional kann der Außenmantel des Reaktors mit einer thermischen Isolierung versehen sein, um die Wärmeverluste möglichst gering zu halten. Die Reformierung von Methanol läuft nun derart ab, daß das Methanol/Sauerstoff-Gemisch in die Bohrungen des Verdampfers geleitet wird und anschließend in entgegengesetzter Richtung durch die mit dem Katalysator gefüllten Bohrungen geleitet wird.

## Patentansprüche

1. Verfahren zur Reduzierung von Stickoxiden in Abgasen von Kraftfahrzeugen durch Reduktion an einem Katalysator unter Zuführung von Wasserstoff, wobei der für die Stickoxid-Reduktion benötigte Wasserstoff an Bord des Kraftfahrzeugs durch Wasserdampfreformierung und/oder durch partielle Oxidation von Kohlenwasserstoffen, z.B. Diesel- oder Ottokraftstoffen, oder Methanol an einem Katalysator erzeugt wird, **dadurch gekennzeichnet,** daß der Katalysator für die Wasserdampfreformierung oder für die partielle Oxidation unabhängig von den Motorabgasen regelbar beheizt wird.

2. Verfahren nach Anspruch 1, **dadurch gekennzeichnet,** daß der Wasserstoff durch eine Mischreaktion aus Wasserdampfreformierung und partieller Oxidation gewonnen wird.

3. Verfahren nach einem der vorangehenden Ansprüche, **dadurch gekennzeichnet,** daß die bei der Erzeugung des Wasserstoffs erhaltenen Reaktionsgase einer Nachbehandlung, z.B. der Wasserdampf-Shift-Reaktion, unterzogen werden.

4. Vorrichtung zur Durchführung des Verfahrens nach einem der Ansprüche 1 bis 3, umfassend

   - einen Reaktor, in welchem ein Katalysator enthalten ist, an dem die Stickoxid-Reduktion unter Zuführung von Wasserstoff durchgeführt wird,
   - eine Vorrichtung zur Erzeugung von Wasserstoff, die sich an Bord des Kraftfahrzeugs befindet, umfassend

      - einen Reaktor zur Wasserdampfreformierung von Kohlenwasserstoffen oder Methanol an einem Katalysator und/oder
      - einen Reaktor zur partiellen Oxidation von Kohlenwasserstoffen oder Methanol an einem Katalysator,

**dadurch gekennzeichnet,** daß für den Reaktor zur Wasserdampfreformierung und für den Reaktor zur partiellen Oxidation eine regelbare Beheizungsvorrichtung vorhanden ist, wobei diese Reaktoren außerhalb des Motorabgases angeordnet sind.

5. Vorrichtung nach Anspruch 4, **dadurch gekennzeichnet,** daß die Beheizungsvorrichtung eine elektrische Heizung, z.B eine Widerstandsheizung oder eine Heizpatrone ist.

6. Vorrichtung nach Anspruch 4 oder 5, **dadurch gekennzeichnet,** daß der Katalysator in dem Reaktor zur Wasserdampfreformierung Kupfer und/oder Zink als aktive Komponenten enthält.

7. Vorrichtung nach einem der Ansprüche 4 bis 6, **dadurch gekennzeichnet,** daß der Reaktor zur Wasserdampfreformierung eine Verdampferstufe enthält, die vor der Hauptreaktionsstufe, in der die Wasserdampfreformierung an dem Katalysator geschieht, angeordnet ist.

8. Vorrichtung nach einem der vorangehenden Ansprüche 4 bis 7, **dadurch gekennzeichnet,** daß im Reaktor zur Wasserdampfreformierung im Anschluß an die Hauptreaktionsstufe, in der die Wasserdampfreformierung an dem Katalysator geschieht, eine Nachbehandlungsstufe angeordnet ist, in welcher das entstehende CO über eine Shift-Reaktion vermindert und/oder die Wasserstoffausbeute erhöht wird.

9. Vorrichtung nach einem der vorangehenden Ansprüche 4 bis 8, **dadurch gekennzeichnet,** daß der Reaktor zur Wasserdampfreformierung als Rohr mit einem Innendurchmesser von bevorzugt 5 bis 50 mm ausgebildet ist.

10. Vorrichtung nach einem der vorangehenden Ansprüche 4 bis 9, **dadurch gekennzeichnet,** daß die Verdampfungsstufe, Hauptreaktionsstufe und Nachbehandlungsstufe des Reaktors zur Wasserdampfreformierung unabhängig voneinander beheizbar sind.

11. Vorrichtung nach Anspruch 4 oder 5, **dadurch gekennzeichnet,** daß der Reaktor zur partiellen Oxidation eine Verdampferstufe enthält, die vor der Hauptreaktionsstufe, in der die partielle Oxidation an dem Katalysator geschieht, angeordnet ist.

12. Vorrichtung nach Anspruch 11, **dadurch gekennzeichnet,** daß sie eine elektrische Heizung zur Beheizung der Verdampferstufe umfaßt.

13. Vorrichtung nach einem der Ansprüche 4,5 oder 11 bis 12, **dadurch gekennzeichnet,** daß eine Zufuhreinrichtung vorhanden ist, mit der die bei der partiellen Oxidation an dem Katalysator entstehenden Produktgase z.B. im Gegenstrom an die Außenwand des Reaktors geführt werden können.

14. Vorrichtung nach einem der Ansprüche 4,5 oder 11 bis 13, **dadurch gekennzeichnet,** daß im Reaktor für die partielle Oxidation im Anschluß an die Hauptreaktionsstufe, in der die partielle Oxidation an dem Katalysator geschieht, eine Nachbehandlungsstufe angeordnet ist, in welcher das entstehende CO über eine Shift-Reaktion vermindert oder ein weiterer Umsatz von Restkohlenwasserstoffen mit Wasserdampf erfolgt wird.

15. Vorrichtung nach einem der Ansprüche 4,5 oder 11 bis 14, **dadurch** gekennzeichnet, daß der Reaktor für die partielle Oxidation als Rohr mit einem Innendurchmesser von bevorzugt 5 bis 50 mm ausgebildet ist.

16. Vorrichtung nach einem der vorangehenden Ansprüche 4 bis 15, **dadurch gekennzeichnet,** daß der Reaktor für die partielle Oxidation und/oder für die Wasserdampfreformierung ein zylindrischer Block mit mehreren axialen Bohrungen ist, wobei in mindestens einem dieser axialen Bohrungen sich der Katalysator befindet, und mindestens einer der axialen Bohrungen die Verdampferstufe darstellt.

17. Vorrichtung nach Anspruch 16, **dadurch gekennzeichnet,** daß in einer zentralen Bohrung des Reaktors eine Heizpatrone angeordnet ist.

**Claims**

1. Process for the reduction of nitrogen oxides in exhaust gases of motor vehicles by reduction on a catalyst while adding hydrogen, the hydrogen needed for the nitrogen oxide reduction being produced on board the motor vehicle by steam reforming and/or by partial oxidation of hydrocarbons, e.g. diesel fuels or petrols, or methanol on a catalyst, characterized in that the catalyst for the steam reforming or for the partial oxidation is controllably heated independently of the engine exhaust gases.

2. Process according to Claim 1, characterized in that the hydrogen is obtained by a mixing reaction from steam reforming and partial oxidation.

3. Process according to one of the preceding claims, characterized in that the reaction gases obtained in the production of the hydrogen are subjected to a treatment, for example steam shift reaction.

4. Device for carrying out the process according to one of Claims 1 to 3, comprising

   - a reactor, containing a catalyst on which the nitrogen oxide reduction is carried out while adding hydrogen,
   - a device for producing hydrogen, which is on board the motor vehicle, comprising
   - a reactor for steam reforming from hydrocarbons or methanol on a catalyst and/or
   - a reactor for the partial oxidation of hydrocarbons or methanol on a catalyst,

   characterized in that there is a controllable heating device for the reactor for the steam reforming and for the reactor for the partial oxidation, these reactors being arranged outside the engine exhaust gas.

5. Device according to Claim 4, characterized in that the heating device is an electric heating system, for example a resistance heating system or a heating cartridge.

6. Device according to Claim 4 or 5, characterized in that the catalyst in the reactor for the steam reforming contains copper and/or zinc as active components.

7. Device according to one of Claims 4 to 6, characterized in that the reactor for the steam reforming contains an evaporator stage, which is arranged upstream of the main reaction stage, in which the steam reforming takes place on the catalyst.

8. Device according to one of the preceding Claims 4 to 7, characterized in that arranged in the reactor for the steam reforming to follow the main reaction stage, in which the steam reforming takes place on the catalyst, there is a treatment stage, in which the CO produced is reduced and/or the hydrogen yield is increased by means of a shift reaction.

9. Device according to one of the preceding Claims 4 to 8, characterized in that the reactor for the steam reforming is designed as a tube with an inside diameter of preferably 5 to 50 mm.

10. Device according to one of the preceding Claims 4 to 9, characterized in that the evaporation stage, main reaction stage and subsequent reaction stage of the reactor for the steam reforming are heatable independently of one another.

11. Device according to Claim 4 or 5, characterized in that the reactor for the partial oxidation contains an evaporator stage, which is arranged upstream of the main reaction stage, in which the partial oxidation takes place on the catalyst.

12. Device according to Claim 11, characterized in that it comprises an electric heating system for the heating of the evaporator stage.

13. Device according to one of Claims 4, 5 or 11 or 12, characterized in that there is a feeding device, by which the product gases produced during the partial oxidation on the catalyst can be passed, for example in countercurrent, to the outer wall of the reactor.

14. Device according to one of Claims 4, 5 or 11 to 13, characterized in that arranged in the reactor for the partial oxidation to follow the main reaction stage, in which the partial oxidation takes place on the catalyst, is a treatment stage, in which the CO produced is reduced or a further conversion of residual hydrocarbons with steam takes place by means of a shift reaction.

15. Device according to one of Claims 4, 5 or 11 to 14, characterized in that the reactor for the partial oxidation is designed as a tube with an inside diameter of preferably 5 to 50 mm.

16. Device according to one of the preceding Claims 4 to 15, characterized in that the reactor for the partial oxidation and/or for the steam reforming is a cylindrical block with a plurality of axial bores, the catalyst being located in at least one of these axial bores, and at least one of the axial bores representing the evaporator stage.

17. Device according to Claim 16, characterized in that a heating cartridge is arranged in a central bore of the reactor.

**Revendications**

1. Procédé de réduction des oxydes d'azote dans les gaz d'échappement de véhicules automobiles par réduction sur un catalyseur avec apport d'hydrogène, l'hydrogène nécessaire à la réduction des oxydes d'azote à bord du véhicule automobile étant produit sur un catalyseur par un reformage à la vapeur d'eau et/ou par une oxydation partielle d'hydrocarbures, comme, par exemple, du carburant diesel ou essence ou du méthanol, caractérisé en ce que le catalyseur est chauffé d'une manière réglable en vue du reformage à la vapeur d'eau ou en vue de l'oxydation partielle, indépendamment des gaz d'échappement du moteur.

2. Procédé selon la revendication 1, caractérisé en ce que l'hydrogène est obtenu par une réaction mixte de reformage à la vapeur d'eau et d'oxydation partielle.

**3.** Procédé selon l'une quelconque des revendications précédentes, caractérisé en ce que les gaz de réaction obtenus lors de la production de l'hydrogène sont soumis à un traitement ultérieur, par exemple à la réaction suractivée à la vapeur d'eau.

**4.** Dispositif en vue de l'exécution du procédé selon l'une quelconque des revendications 1 à 3, comprenant

- un réacteur, dans lequel est contenu un catalyseur, sur lequel la réduction des oxydes d'azote est effectuée sous apport d'hydrogène,
- un dispositif en vue de la production d'hydrogène, qui se trouve à bord du véhicule automobile, comprenant

  - un réacteur en vue du reformage à la vapeur d'eau d'hydrocarbures ou de méthanol sur un catalyseur et/ou
  - un réacteur en vue de l'oxydation partielle d'hydrocarbures ou de méthanol sur un catalyseur,

caractérisé en ce qu'il existe, pour le réacteur en vue du reformage à la vapeur d'eau et pour le réacteur en vue de l'oxydation partielle, un dispositif de chauffage réglable, ces réacteurs étant disposés à l'écart du gaz d'échappement du moteur.

**5.** Dispositif selon la revendication 4, caractérisé en ce que le dispositif de chauffage est un chauffage électrique, par exemple un chauffage à résistance ou une cartouche chauffante.

**6.** Dispositif selon la revendication 4 ou 5, caractérisé en ce que le catalyseur dans le réacteur en vue du reformage à la vapeur d'eau comprend du cuivre et/ou du zinc en tant que composants actifs.

**7.** Dispositif selon l'une quelconque des revendications 4 à 6, caractérisé en ce que le réacteur en vue du reformage à la vapeur d'eau comprend un étage de vaporisateur, qui est disposé avant l'étage de réaction principale, dans lequel le reformage à la vapeur d'eau se produit sur le catalyseur.

**8.** Dispositif selon l'une quelconque des revendications précédentes 4 à 7, caractérisé en ce que l'on dispose, dans le réacteur en vue du reformage à la vapeur d'eau, à la suite de l'étage de réaction principale, dans lequel le reformage à la vapeur d'eau se produit sur le catalyseur, un étage de traitement ultérieur, dans lequel le CO qui se forme est réduit par l'intermédiaire d'une réaction suractivée et/ou dans lequel le rendement en hydrogène est augmenté.

**9.** Dispositif selon l'une quelconque des revendications précédentes 4 à 8, caractérisé en ce que le réacteur en vue du reformage à la vapeur d'eau est construit en tant que tube ayant un diamètre interne de préférence de 5 à 50 mm.

**10.** Dispositif selon l'une quelconque des revendications précédentes 4 à 9, caractérisé en ce que l'étage de vaporisation, l'étage de réaction principale et l'étage de traitement ultérieur du réacteur en vue du reformage à la vapeur d'eau peuvent être chauffés indépendamment les uns des autres.

**11.** Dispositif selon la revendication 4 ou 5, caractérisé en ce que le réacteur en vue de l'oxydation partielle contient un étage de vaporisateur, qui est disposé avant l'étage de réaction principale, dans lequel l'oxydation partielle se produit sur le catalyseur.

**12.** Dispositif selon la revendication 11, caractérisé en ce qu'il comprend un chauffage électrique en vue du chauffage de l'étage de vaporisateur.

**13.** Dispositif selon l'une quelconque des revendications 4, 5 ou 11 à 12, caractérisé en ce qu'il existe un dispositif d'apport grâce auquel les gaz de produit, qui se forment lors de l'oxydation partielle sur le catalyseur, peuvent être acheminés par exemple à contre-courant à la paroi externe du réacteur.

**14.** Dispositif selon l'une quelconque des revendications 4, 5 ou 11 à 13, caractérisé en ce que l'on dispose, dans le réacteur en vue de l'oxydation partielle, à la suite de l'étage de réaction principale, dans lequel l'oxydation partielle se produit sur le catalyseur, un étage de traitement ultérieur, dans lequel le CO qui se forme est réduit par l'intermédiaire d'une réaction suractivée ou dans lequel a lieu une réaction supplémentaire d' hydrocarbures restants avec de la vapeur d'eau.

**15.** Dispositif selon l'une quelconque des revendications 4, 5 ou 11 à 14, caractérisé en ce que le réacteur en vue de l'oxydation partielle est construit en tant que tube ayant un diamètre intérieur de préférence de 5 à 50 mm.

**16.** Dispositif selon l'une quelconque des revendications précédentes 4 à 15, caractérisé en ce que le réacteur en vue de l'oxydation partielle et/ou en vue du reformage à la vapeur d'eau est un bloc cylindrique ayant plusieurs alésages axiaux, le catalyseur se trouvant dans au moins un de ces alésages axiaux, et au moins un des alésages axiaux représentant l'étage de vaporisateur.

**17.** Dispositif selon la revendication 16, caractérisé en ce qu'une cartouche chauffante est disposée dans un alésage central du réacteur.

Fig. 1

Fig. 2

H$_2$ + CO$_2$

(+H$_2$O)

el. Heizung

Gasnachbehandlungssektion
(optional)

Reformersektion

Verdampfersektion

H$_2$O +

CH$_3$OH

Fig. 3

Kompressor

Luft

Tank

CH₃OH (+H₂O)

Pumpe   Verdampfer   Reaktor   Gasnachbehandlung
(optional)

H₂ + CO₂

(+H₂O)

EP 0 721 795 B1

EP 0 721 795 B1

## Fig. 4

el. Heizung

Luft

el. Heizung

CH$_3$OH

+ H$_2$O

H$_2$ + CO$_2$

(+ H$_2$ + N$_2$)

Verdampfersektion

Mischer

Partielle
Oxidation

Gasnachbehandlung

# Fig.5

a)

Katalysator

Verdampfer

Heizpatrone

A

B

b)

d8

d8

d4

d35

100